# EUROPÄISCHE PATENTSCHRIFT

(11) **EP 1 280 444 B1**
(45) Veröffentlichungstag und Bekanntmachung des Hinweises auf die Patenterteilung: **07.09.2005**
(21) Anmeldenummer: 01933897.9
(22) Anmeldetag: 27.04.2001
(51) Int. Cl.: A47J 43/08, A47J 43/044

(54) **KUPPLUNGSVORRICHTUNG FÜR EIN GERÄT DES HÄUSLICHEN BEDARFS**
COUPLING DEVICE FOR AN APPLIANCE FOR DOMESTIC USE
DISPOSITIF D'ACCOUPLEMENT POUR APPAREIL A USAGE MENAGER

(30) Priorität: 06.05.2000 DE 10022131
(43) Veröffentlichungstag der Anmeldung: 05.02.2003
(73) Patentinhaber: Braun GmbH, 61476 Kronberg (DE)
(72) Erfinder: PENARANDA, Mariano, E-08005 Barcelona (ES); MASIP, Josep-Maria, E-08190 Sant Cugat del Vallés (Barcelona (ES)
(74) Vertreter: Müller, Eckhard
(86) Internationale Anmeldenummer: PCT/EP2001/004757
(87) Internationale Veröffentlichungsnummer: WO 2001/084996

(56) Entgegenhaltungen:
- EP-A- 0 692 215
- FR-A- 1 467 108

## Beschreibung

Die Erfindung betrifft eine Kupplungsvorrichtung für eine Küchenmaschine gemäß dem Oberbegriff des Patentanspruchs 1.

Derartige Kupplungsvorrichtungen für Küchenmaschinen sind bereits im Stand der Technik bekannt. So beschreibt die FR 1467108 eine Vorrichtung, bei der sich eine am Werkzeugschaft angeordnete Buchse elastisch in den unteren Bereich des Antriebsteils einhakt. Hierfür weist das Antriebsteil an seinem unteren Ende einen Riegel auf, der radial unter der Wirkung einer Schraubenfeder in eine Nut eingreift, die am Außenumfang der Buchse angebracht ist. Der Riegel kann dabei von einer Bedientaste freigeschaltet werden, die in verriegelter Position seitlich aus dem Antriebsteil hervorragt.

Ferner ist aus der FR 1467108 eine Auswerfervorrichtung bekannt, die in das Antriebsteil integriert ist. Beim Einschieben des Werkzeugschafts wird gemäß diesem Stand der Technik eine Schraubenfeder vorgespannt und im Falle des Entriegelns als Auswerfer verwendet.

Weiterhin ist aus der EP 0692215 A1 ein Handmixer bekannt, der ein Antriebsteil und einen wechselbaren Werkzeugschaft aufweist, in dem eine Werkzeugwelle drehbar gelagert ist. Zur Befestigung des Werkzeugschafts am Antriebsteil greift eine Spreizklammer des Antriebsteils in eine Befestigungsnut des Werkzeugschafts ein. Zum Lösen des Werkzeugschafts wird die als Metallfeder ausgestaltete Spreizklammer mittels eines Druckknopfes, der als separates Bauteil ausgebildet ist, in Richtung eines gegenüberliegenden Druckknopfes verschoben.

Der vorliegenden Erfindung liegt die Aufgabe zugrunde, eine einfache und kostengünstige Lösung für das Verbinden eines Werkzeugschafts mit dem Antriebsteil eines Geräts des häuslichen Bedarfs, insbesondere eines Hand- oder Stabmixers zur Verfügung zu stellen.

Diese Aufgabe wird durch eine Kupplungsvorrichtung mit den Merkmalen des Patentanspruchs 1 gelöst. Durch die erfindungsgemäße Ausgestaltung wird eine besonders einfach und kostengünstig herstellbare Kupplungsvorrichtung zur Verfügung gestellt. Dabei kann die erfindungsgemäße Vorrichtung bei Handmixem, wie beispielsweise Stabmixem, aber auch bei stationären Küchenmaschinen oder sonstigen elektrischen Geräten des häuslichen Bedarfs zur Anwendung kommen. Der Kupplungsabschnitt des Antriebsteils kann dabei beispielsweise im wesentlichen als zylindrischer Endabschnitt ausgebildet sein, in dessen Inneren die Verriegelungseinrichtung angeordnet ist. Das Oberteil des Werkzeugschafts ist dabei an seinem Innenumfang ebenfalls im wesentlichen zylindrisch ausgebildet, so daß es quasi wie eine Hülse über den Kupplungsabschnitt des Antriebsteils herübergleiten kann und auf dem zylindrischen Endabschnitt zentriert und axial fixiert wird. Ferner ist im Werkzeugschaft eine Werkzeugwelle drehbar gelagert, dessen eines Ende mit der Antriebswelle des Antriebsteils kuppelbar ist und dessen anderes Ende in den Mischraum einer glockenförmigen Abschirmung hineinragt und mit einem Arbeitsmesser fest verbunden ist, so wie dies eingangs im Stand der Technik erwähnt wurde.

Selbstverständlich sind auch andere ringförmige Ausgestaltungen des Federelements, wie z.B. kreis-, prismen-, ellipsenförmige oder sonstige Formen von Ringen möglich. Die Form des im wesentlichen als Hülse ausgebildeten Oberteils des Werkzeugschafts korrespondiert dabei mit der Form des Kupplungsabschnitts des Antriebsteils, um diese Teile ineinander stecken zu können. Dabei kann das Sperrelement, das hier vorzugsweise als Vertiefung ausgebildet ist und das am Innenumfang des Werkzeugschafts angebracht ist, beispielsweise als eine umlaufende Nut oder aber als einzelner länglicher Schlitz ausgebildet sein. Im Falle der Ausbildung der Verriegelungseinrichtung als Ellipse befinden sich die am weitesten voneinander entfernten Punkte auf dem langen Ellipsendurchmesser. Im Falle eines rautenförmigen Federelements befinden sich die am weitesten voneinander entfernt gelegenen Punkte auf der langen Diagonalen.

Das Verriegelungselement kann beispielsweise durch eine heniorstehende Nase oder einen Wulst oder auch eine Vertiefung gebildet sein, das einstückig mit dem Federelement verbunden ist und das dann in eine entsprechende Vertiefung oder Nase oder sonstigen Vorsprung am Werkzeugschaft eingreift. Dabei kann es sich bei der Betätigungseinrichtung um einen an das Federelement angeformten Wulst handeln, der die Funktion eines Druckknopfes hat. Die Mehrfachfunktion ist dadurch gegeben, daß sowohl die Betätigungseinrichtung als auch das Verriegelungselement einstückig mit dem Federelement verbunden ist, wodurch eine Einsparung zusätzlicher Bauteile erreicht und die Betätigungs- und Verriegelungsfunktion durch ein Bauteil erfüllt wird.

Durch die Übereinanderanordnung der Betätigungseinrichtung und des Verriegelungselementes wird beim Drücken des Federelements an der Betätigungseinrichtung das Verriegelungselement radial derart nach innen verschoben, daß es aus dem Sperrelement gleitet und so den Werkzeugschaft zur Entnahme freigibt. Das Betätigungselement kann nach der Erfindung auch gleichzeitig das Verriegelungselement bilden. Nach der Erfindung erfolgt die Verformung des Federelements dadurch, daß auf der einen Seite das Betätigungselement gedrückt wird, während sich auf der anderen Seite das Federelement am Gehäuse des Antriebsteils abstützt.

Eine vorteilhafte Ausführungsform der erfindungsgemäßen Kupplungsvorrichtung wird durch die Merkmale des Patentanspruchs 2 beschrieben. Durch die diametrale Anordnung der Verriegelungs- und Betätigungselemente kann das Federelement auf einfache Weise und mit geringer Kraft durch Daumen und Zeigefinger einer Hand zusammengedrückt werden, wodurch sich ebenfalls die Verriegelungselemente nach innen verschieben. Beim Lösen geht das Federelement und die Verriegelungselemente wieder in ihren Ausgangszustand zurück.

Gemäß den Merkmalen des Patentanspruchs 3 können die Öffnungen für die Betätigungselemente längliche oder ovale Schlitze oder aber auch rechteckige, kreisförmige oder sonstwie geformte Öffnungen sein. Durch diese Öffnungen stehen die Betäfigungselemente im verriegelten Zustand nach außen hervor und sind so zum Betätigen von außen frei zugänglich. Beim Betätigen von Hand verschwinden die Betätigungselemente teilweise in den Öffnungen der Außenwand des Kupplungsabschnitts des Außenteils, wodurch auch die Verriegelungselemente sich nach innen bewegen und aus ihren Sperrelementen herausgleiten und dadurch der Werkzeugschaft entriegelt wird und von dem Kupplungsabschnitt bzw. dem Antriebsteil heruntergleiten kann.

Durch die Merkmale des Patentanspruchs 4 läßt sich das Federelement besonders wirkungsvoll und einfach von außen betätigen, da das Federelement im wesentlichen symmetrisch aufgebaut ist und bei Kraftbeaufschlagung gleichmäßig von beiden Seiten zusammengedrückt wird.

Gemäß den Merkmalen des Patentanspruchs 5 wird durch die Übereinanderanordnung des Verriegelungselements und der Betätigungseinrichtung erreicht, daß der an der Betätigungseinrichtung zurückgelegte Weg gleich dem Weg am Verriegelungselement ist, d.h., es ergibt sich eine direkte Wegübertragung bei geringsten Betätigungskräften und Verschiebewegen, was letztendlich zu einem einfachen und direkten Entriegeln der Kupplungsvorrichtung führt.

Eine besonders vorteilhafte Weiterbildung der vorliegenden Erfindung sieht dabei die Merkmale des Patentanspruchs 6 vor. Als geeignete Materialien kommen beispielsweise federelastisches Polypropylen, Polyäthylen oder Polyamid in Frage. Diese Materialien lassen sich einfach und kostengünstig zu Spritzgußteilen verarbeiten. Durch die diesen Kunststoffen inhärente Federelastizität wird gewährleistet, daß nach einer entsprechenden gewünschten Verformung des Federelementes dieses federelastisch in seine Ausgangsform zurückversetzt wird. Außerdem kann durch die Ausgestaltung als einstückiges Kunststoffteil eine Vielzahl von Funktionen mit einem einzigen Bauteil erfüllt werden.

Bei einer vorteilhaften Ausführungsform mit den Merkmalen des Patentanspruchs 7 zeigt sich besonders die Mehrfachfunktion des einstückig mit dem Federelement ausgebildeten Auswerfers. Hierdurch können Bauteile eingespart und dadurch Kosten reduziert werden. Ferner sind die Funktionen des Auswerfers und der Verriegelungselemente geschickt miteinander gekoppelt, da der Auswerfer bei zylindrischer Ausgestaltung des Federelements um 90 Grad zu den Verriegelungselementen, bei elliptischer Bauweise des Federelements auf dem kurzen Durchmesser bzw. bei rautenförmiger Bauweise des Federelements auf der kurzen Diagonalen angeordnet ist. Bei entsprechender Betätigung der Verriegelungseinrichtung über die Betätigungselemente wird das Federelement zum Entriegeln verformt, so daß die Bereiche des Federringes um die Auswerfer, bzw. die kurzen Diagonalen bzw. die kurzen Durchmesser in ihrer Länge vergrößert werden, während hingegen der Betätigungsbereich des Federelements zusammengedrückt wird. Dabei werden die Auswerfer gegen den schräg verlaufenden Innenumfang des Werkzeugschafts gedrückt, wodurch dieser bei gleichzeitiger Entriegelung der Verriegelungselemente vom Antriebsteil entkoppelt, weggeschoben und dadurch axial in Längsrichtung des Antriebsteils ausgeworfen wird.

Eine weitere vorteilhafte Mehrfachfunktion wird durch die Merkmale des Patentanspruchs 8 beschrieben, wobei die Auswerfer Rampenflächen aufweisen, die bei ihrer radialen Betätigung eine axiale in Längsrichtung des Antriebsteils gerichtete Auswerferbewegung bewirken. Dabei wird die Steigung der Rampe so flach gewählt, daß die Betätigungskräfte für eine Bedienungsperson nicht zu hoch sind und dennoch der Weg dabei ausreicht, den Werkzeugschaft vom Antriebsteil sichtbar zu lösen.

Schließlich sieht eine weitere vorteilhafte Ausführungsform der vorliegenden Kupplungsvorrichtung die Merkmale des Patentanspruchs 9 vor. Durch entsprechende Führungseinrichtungen, die beispielsweise durch am Federelement angebrachte Nuten und am Antriebsteil vorhandene Führungsrippen gebildet werden können, wird beispielsweise ein Verkanten des Federelements verhindert, wodurch eine sichere Funktion gewährleistet wird.

Weiterhin ist es besonders vorteilhaft, daß die Verriegelungseinrichtung der vorliegenden Erfindung die Merkmale des Patentanspruchs 10 aufweist. Eine derartige Verliersicherung kann beispielsweise dadurch zur Verfügung gestellt werden, daß entweder die Auswerfer oder die Verriegelungselemente - im Ausführungsbeispiel vorzugsweise die Auswerfer - immer im Eingriff mit den am Antriebsteil ausgebildeten Durchlässen stehen. Durch eine derar tige Fixierung des Federelements im Antriebsbauteil wird die Montage erheblich erleichtert, da das Federelement nach Einbau in seiner Positionen fixiert ist. Ein Herausrutschen aus der vorbestimmten Position und ein Verklemmen mit anderen Bauteilen wird dadurch verhindert. Die Auswerfer durchdringen das Antriebsteil und ragen radial so weit aus diesem heraus, daß sie beim Einsetzen in den Werkzeugschaft in an diesem ausgebildeten Vertiefungen , die die Sperrelemente bilden, rastend eingreifen.

Eine weitere vorteilhafte Ausgestaltungen der vorliegenden Erfindung sieht die Merkmale des Patentanspruchs 11 vor. Hierdurch wird ein sogenanntes Einschnappen der Verriegelungselemente beim Einkuppelvorgang ermöglicht, ohne daß dabei die Betätigungseinrichtungen hinderlich im Wege stehen. Dies wird durch die örtliche Trennung der Verriegelungselemente gegenüber den Betätigungseinrichtungen erreicht. Hierdurch können die Verriegelungselemente beim Aufsetzen des Werkzeugschafts in die entsprechende Öffnung der Außenwand des Kupplungsabschnitts ohne Betätigung der Betätigungsvorrichtung zurückgedrückt werden, bis diese mit den Vertiefungen am Innenumfang des Werkzeugschafts fluchten. In diesem Moment schnappen die Verriegelungselemente aufgrund der Federwirkung des senkrechten Verbindungssteges zurück. Die Kupplungsverbindung ist nun eingerastet und verriegelt. Eine Entriegelung kann nun nur noch durch Betätigung der Betätigungseinrichtungen erfolgen.

Zum verbesserten Einschnappen der Verriegelungselemente sind diese gemäß Patentanspruch 12 ausgestaltet. Hierdurch haben die Verriegelungselemente die Wirkung eines Widerhakens einerseits und andererseits wird durch die mit den Gleitflächen am Federelement zusammenwirkenden Zentrierflächen am Werkzeugschaft erreicht, daß das Federelement den Werkzeugschaft stets spielfrei in das Antriebsteil drückt und dadurch die Wände gegen die Anschlagflächen mit Vorspannung gedrückt werden, da das Federelement im Antriebsteil immer mit geringer Vorspannung gehalten ist.

Gemäß den Merkmalen des Patentanspruchs 13 gleitet beim Entkoppeln der Werkzeugschaft auf dem keilförmigen Auswerfer wie auf einer Rampe. Die zusätzliche Federwirkung durch die zweiten Verbindungsstege hilft, den Auswerfdruck zu dosieren. Außerdem wird dadurch ein Verkanten verhindert.

Weitere Ausgestaltungen und Vorteile der Erfindung werden durch die Beschreibung der Ausführungsbeispiele unter Bezugnahme auf die beigefügten Zeichnungen erfäutert. Darin zeigen:
- Fig. 1: eine schematische Darstellung eines Teillängsausschnittes einer erfindungsgemäßen Ausführungsform einer Kupplungsvorrichtung eines Stabmixers;
- Fig. 2: die erfindungsgemäße Ausführungsform aus Fig. 1 um 90 Grad gedreht im Schnitt, allerdings ohne Motor, Antriebsspindel, Kupplungshülse und Antriebswelle;
- Fig. 3: eine perspektivische Ansicht des erfindungsgemäßen Federelements der Kupplungsvorrichtung aus Fig. 1;
- Fig. 4 und 4a: eine schematische Funktionsdarstellung der erfindungsgemäßen Ausführungsform aus Fig. 1 in verriegeltem Zustand;
- Fig. 5 und 5a: eine schematische Funktionsdarstellung der erfindungsgemäßen Ausführungsform aus Fig. 1 im entriegelten Zustand.

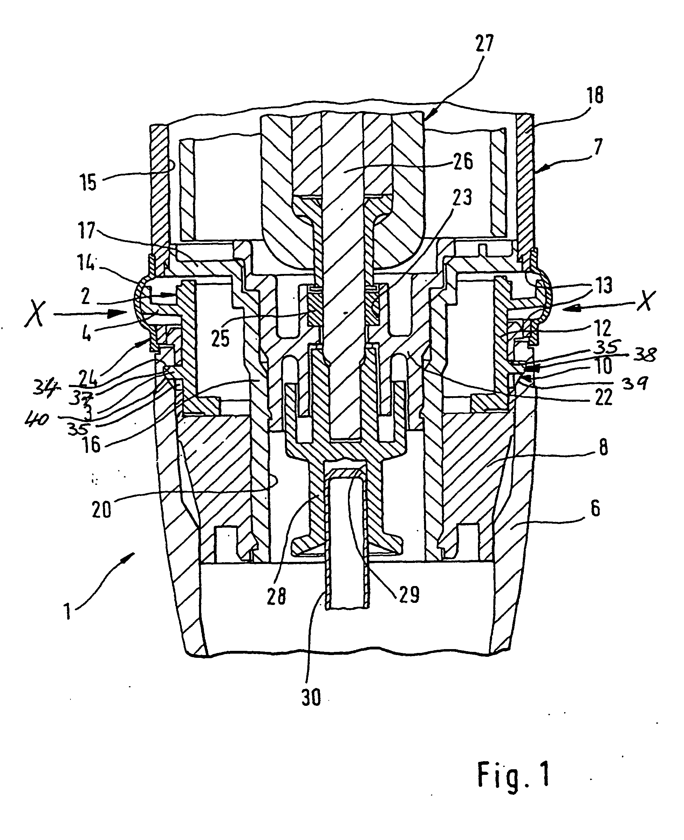

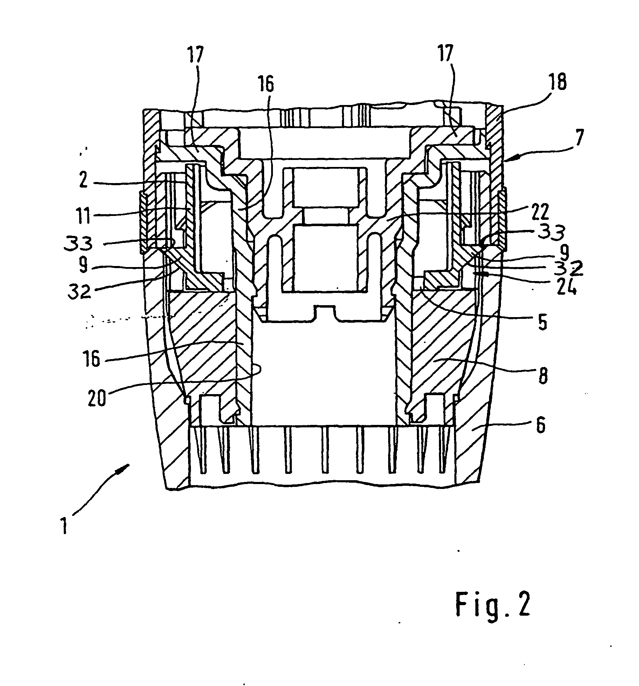

Figuren 1 und 2 zeigen eine vorteilhafte Ausführungsform der erfindungsgemäßen Kupplungsvorrichtung 1 schematisch im Schnitt. Darin ist der Werkzeugschaft 6 mit seinem oberen Abschnitt dargestellt, der den unteren kegelstumpfförmigen Kupplungsabschnitt 24 des Antriebsteils 7 quasi wie eine Hülse umfaßt. Das Antriebsteil 7 und der Werkzeugschaft 6 sind im vorliegenden Ausführungsbeispiel im wesentlichen aus Kunststoff hergestellt. Wie in Fig. 1 dargestellt, weist der Werkzeugschaft 6 dabei an seinem oberen Innenumfang als längliche Nuten ausgebildete Verriegelungsaufnahmen bzw. Sperrelemente 10 auf, in denen Verriegelungselemente 3 aufgenommen sind. In der Bohrung 15 des Antriebsteils 7 ist eine Lagerhülse 16 befestigt, in deren Bohrung 20 eine weitere Lagerhülse 22 befestigt ist, in deren Bohrung 23 wiederum ein Gleitlager 25 eingesetzt ist, in dem die Antriebsspindel 26 des im Antriebsteil 7 drehfest gelagerten Elektromotors 27 drehbar gelagert ist. Das freie Ende der Antriebsspindel 26 ist mit einer Kupplungshülse 28 drehfest befestigt, die eine Aufnahmebohrung 29 aufweist, in der die drehfeste, lösbare im Werkzeugschaft 6 gelagerte Antriebswelle 30 drehfest und wieder lösbar eingekuppelt ist. An dem in der Zeichnung nicht dargestellten anderen Ende der Werkzeugwelle ist ein zum Bearbeiten von Nahrungsmitteln dienendes Messer bzw. Arbeitswerkzeug (nicht dargestellt) befestigt, das von einer Abschirmung, vorzugsweise Glocke, umgeben ist, so wie dies auch beispielsweise aus der FR-B-1467108 bekannt ist.

Die Antriebswelle 30 weist in der Zeichnung nicht dargestellte Mitnahmemittel auf, die in entsprechende Mitnahmemittel (nicht dargestellt) in der Aufnahmebohrung 29 zum drehfesten aber lösbaren Eingriff eingreifen. Die Lagerhülse 16 weist nach Fig. 1 einen um 90 Grad abgewinkelten Ringbund 17 auf, der sich an der Bohrung 15 des antriebsseitigen Gehäuses 18 abstützt und zentriert.

Außerdem ist in Fig. 1 das aus federelastischem Kunststoff hergestellte Federelement 2 im Schnitt dargestellt. Das Federelement 2 ist dabei rautenförmig mit abgerundeten Ecken ausgebildet. In Fig. 1 sind die Eckpunkte auf der langen Diagonale dargestellt. Die durch das rautenförmige Federelement 2 ausgebildete Ebene wird im folgenden als Federelementebene bezeichnet.

Ferner sind in Figur 1 zwei gegenüberliegende Verriegelungselemente 3 dargestellt, die einstückig mit Verbindungsstegen 12 verbunden sind. Die Verriegelungselemente 3 sind dabei keilförmig ausgebildet und schlagen mit ihrer Anschlagfläche 34 an der horizontal verlaufenden Wand 37 der als Sacklochbohrungen oder Vertiefungen ausgebildeten Sperrelemente 10 an, nachdem sie durch die vom Federelement 2 ausgeübte radiale Vorspannung über die zusammenwirkenden Gleit- und Zentrierflächen 40, 39 nach oben bis auf Anschlag verschoben wurden. In dieser Stellung, wie auch in der entkuppelten Stellung, durchdringen die Verriegelungselemente 3 die Durchlässe 35 und greifen in die hinterschnittenen Sperrelemente 10 ein.

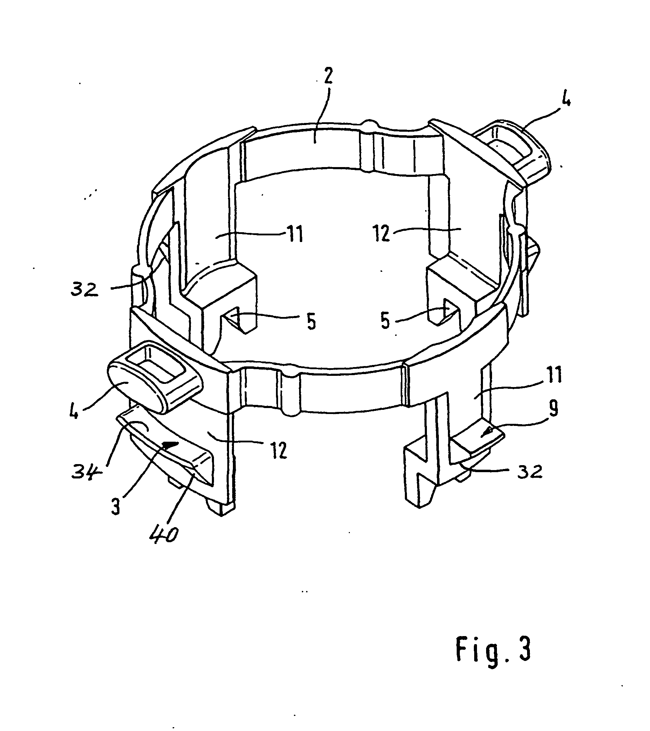

Die Verbindungsstege 12 sind nach den Figuren 1 und 3 senkrecht zur Federlementebene einstückig am Federelement 2 angeformt. Die Verbindungsstege 12 weisen an ihren unteren Enden senkrecht verlaufende Führungsnuten 5 auf, wie dies in Fig. 3 besonders gut erkennbar ist.

Ferner sind in den Figuren 1 und 3 oberhalb der Verriegelungselemente 3 am Befestigungspunkt der Verbindungsstege 12 diametral gegenüberliegende Betätigungseinrichtungen 4 vorgesehen, die ebenfalls einstückig am Federelement 2 ausgeformt sind. Dabei sind die Betätigungseinrichtungen 4 als wulstartige Druckknöpfe ausgebildet, die nach Fig. 1 durch eine Öffnung 13 aus dem Kupplungsabschnitt des Antriebsteils 7 hervorstehen. Um das Eindringen von Schmutz in das Antriebsteil 7 zu verhindern, sind flexible Gummidichtungen 14 vorgesehen, die die Öffnungen 13 und die Betätigungseinrichtungen 4 abdecken. Das Federelement 2 wird durch Führungsrippen 8 und den Ringbund 17 an dem Gehäuse 18 des Antriebsteils 7 in seiner Position gehalten. Dabei gleiten die in Fig. 3 dargestellten Führungsnuten 5 bei Betätigung der Verriegelungseinrichtung auf den Führungsrippen 8.

Fig. 2 zeigt die gleiche Ausführungsform wie Fig. 1, jedoch verläuft der Schnitt um 90 Grad versetzt, allerdings werden hier einige Teile der Einfachheit halber weggelassen. In Fig. 2 sind die um 90 Grad zu den Verriegelungselementen 3 versetzt angeordneten Auswerfer 9 dargestellt. Die Auswerfer 9 sind ebenfalls einstückig über Verbindungsstege 11 mit dem Federelement 2 verbunden (siehe Fig. 3) und weisen eine leicht keilförmige Gestalt auf, wobei sie an ihrer Unterseite eine Rampenfläche 32 bilden, die an Anschlagflächen 33 des Werkzeugschaftes 6 anliegen und die, wenn beidseitig gegen die Betätigungseinrichtungen 4 radial von außen nach innen von außen gedrückt wird (siehe Pfeilrichtung X in Fig. 1), sich die Auswerfer 9 gerade in umgekehrter Richtung radial nach außen bewegen und dabei über die Anschlußflächen 33 den Werkzeugschaft gemäß Fig. 2 nach unten verschieben, was aber in den Figuren nicht gezeigt ist, da hier nur die zusammengesetzte Stellung von Werkzeugschaft 6 und und Antriebsteil 2 dargestellt ist. Dabei haben sich die Verriegelungselemente 3 bereits aus den Vertiefungen 38 radial nach innen bewegt und den Werkzeugschaft 3 zur axialen Bewegung freigegeben. An ihrem unteren Ende weisen die Verbindungsstege 11 ebenfalls Führungsnuten 5 auf, die durch Führungsrippen 8 in radialer Richtung geführt werden, indem sie diese von oben und seitlich umgreifen. Die Auswerfer 9 sind perspektivisch in Fig. 3 dargestellt.

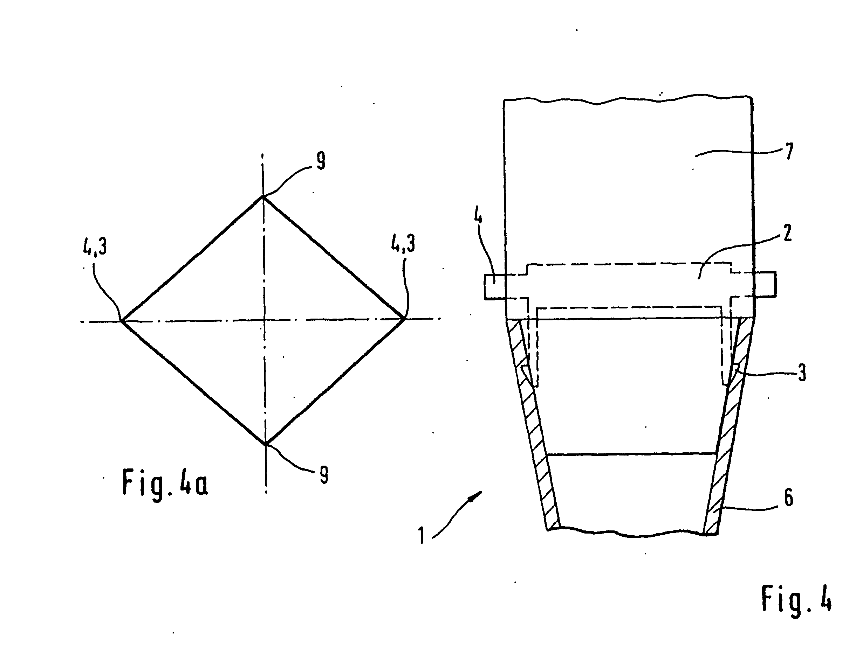

Das in Fig. 3 als Einzelteil dargestellte Federelement 2 ist ein einstückiges Spritzgußbauteil, welches aus federelastischem thermoplastischem Kunststoff hergestellt ist. Dabei weist das Federelement 2 eine ringförmige Form auf, wobei die Betätigungseinrichtungen 4 sowie die an einem Verbindungssteg 12 unterhalb angebrachten Verriegelungselemente 3 im Winkel von 90 Grad zu den Verbindungsstegen 11 angeordnet sind, an denen die Auswerfer 9 und die nach unten offenen Führungsnuten 5 angeformt sind. Die Verriegelungselemente 3 sind auf einem Verbindungssteg 12 angeordnet, der weiter unten die Führungsnuten 5 aufweist. Fig. 4 und Fig. 4a zeigen eine schematische Funktionsdarstellung der erfindungsgemäßen Kupplungsvorrichtung, wobei das im Antriebsteil 7 aufgenommene Federelement 2 gestrichelt dargestellt ist. In Fig. 4 ist der Werkzeugschaft 6 in verriegeltem Zustand dargestellt. In diesem Zustand sind die Betätigungseinrichtungen 4 am weitesten voneinander entfernt. Die Auswerfer 9 hingegen befinden sich auf einem kürzeren Abstand gegenüberliegend angeordnet. Dies geht auch aus der stark vereinfachten Skizze in Fig. 4a hervor, die eine schematische Draufsicht auf ein rautenförmiges Federelement 2 zeigt.

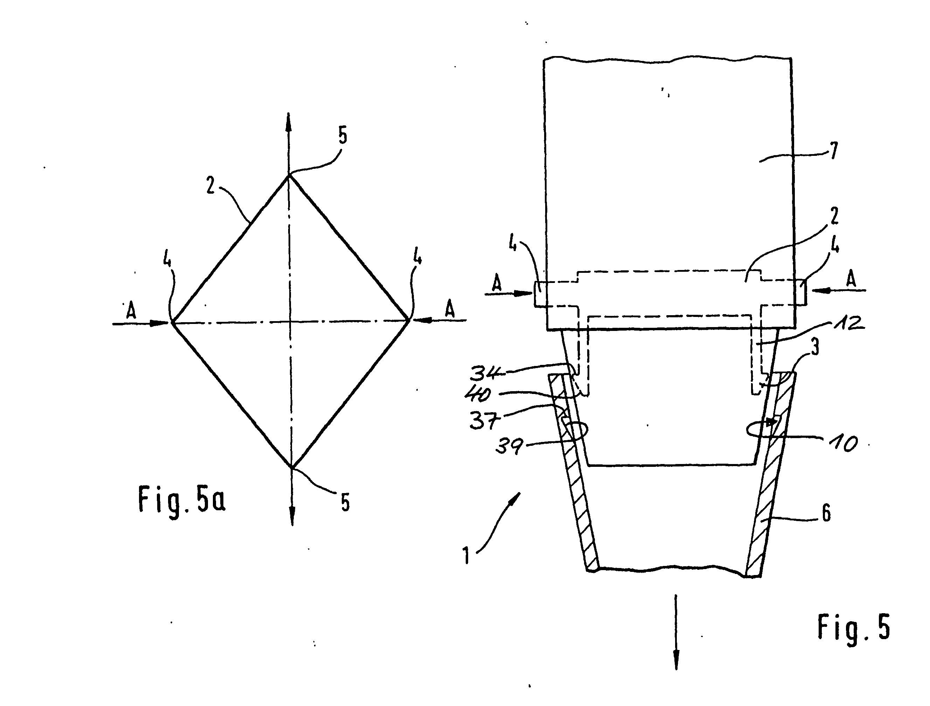

Figuren 5 und 5a zeigen eine zweite schematische Funktionsdarstellung, bei der die Betätigungseinrichtungen 4 aus Figuren 4 und 4a in Pfeilrichtung A betätigt worden sind. Dadurch verformt sich das rautenförmige Federelement 2 derart, daß die Verriegelungselemente 3 entriegeln und die Auswerfer 5 den Werkzeugschaft 6 vom Antriebsteil 7 trennen. Dies ist besonders anschaulich in der schematischen Draufsicht auf das rautenförmige Federelement 2 in Fig. 5a erkennbar. Die Auswerfer 5 befinden sich dabei in der betätigten Stellung auf der langen Diagonalen der Raute, während sich die Betätigungseinrichtungen 4 in dieser Stellung auf der kurzen Diagonalen befinden. Die Verriegelungseinrichtungen 3 verschwinden dabei vollständig im Antriebsteil, wie aus Fig. 5 hervorgeht.

## Patentansprüche

1. Kupplungsvorrichtung (1) für ein Gerät des häuslichen Bedarfs, insbesondere ein Hand- oder Stabmixer, zum Verbinden eines Antriebsteils (7) mit einem Werkzeugschaft (6), wobei an einem Kupplungsabschnitt (24) des Antriebsteils (7) eine Verriegelungseinrichtung (2) mit mindestens einem Verriegelungselement (3) angeordnet ist, das im verriegelten Zustand mit einem Sperrelement (10) des Werkzeugschafts (6) im Eingriff steht,
**dadurch gekennzeichnet,**
**daß** die Verriegelungseinrichtung (2) als ringförmiges Federelement ausgebildet ist, und daß im Bereich des Verriegelungselementes (3) eine Betätigungseinrichtung (4) ausgebildet ist, durch die bei ihrer Betätigung das Federelement (2) derart elastisch verformt wird, daß das Verriegelungselement (3) außer Eingriff des Sperrelements (10) gelangt.

2. Kupplungsvorrichtung (1) nach Anspruch 1,
**dadurch gekennzeichnet,**
**daß** diametral gegenüberliegend am Federlement (2) je ein Verriegelungselement (3) angeordnet ist und daß an entsprechender Stelle am Werkzeugschaft (6) je ein Sperrelement (10) ausgebildet ist.

3. Kupplungsvorrichtung (1) nach Anspruch 1,
**dadurch gekennzeichnet,**
**daß** an der Außenwand des Kupplungsabschnitts (24) des Antriebsteils (7) mindestens eine Öffnung (13) vorhanden ist, durch die mindestens eine am Federelement (2) ausgebildete Betätigungseinrichtung (4) im verriegelten Zustand nach außen hervorragt.

4. Kupplungsvorrichtung (1) nach Anspruch 3,
**dadurch gekennzeichnet,**
**daß** diametral gegenüberliegend am Federelement (2) je eine Betätigungseinrichtung (4) ausgebildet ist, die durch am Antriebsteil (7) ausgebildete Öffnungen (13) nach außen hervorstehen.

5. Kupplungsvorrichtung (1) nach Anspruch 4,
**dadurch gekennzeichnet,**
**daß** die Betätigungseinrichtungen (4) in Höhe der Verriegelungselemente (3) am Federelement (2) ausgebildet sind.

6. Kupplungsvorrichtung (1) nach Anspruch 1,
**dadurch gekennzeichnet,**
**daß** die Verriegelungseinrichtung (2) aus einem geeigneten thermoplastischen Kunststoff hergestellt ist.

7. Kupplungsvorrichtung (1) nach Anspruch 1,
**dadurch gekennzeichnet,**
**daß** die Verriegelungseinrichtung (2) mindestens einen Auswerfer (9) aufweist, der um 90 Grad gegenüber dem Verriegelungselement (3) versetzt angeordnet ist.

8. Kupplungsvorrichtung (1) nach Anspruch 7,
**dadurch gekennzeichnet,**
**daß** diametral gegenüberliegend je ein Auswerfer (9) am Federelement (2) ausgebildet ist, und daß die Auswerfer (9) Rampenflächen (32) aufweisen, die mit am Werkzeugschaft (6) korrespondierenden Anschlagflächen (33) zusammenwirken.

9. Kupplungsvorrichtung (1) nach Anspruch 1,
**dadurch gekennzeichnet,**
**daß** an der Verriegelungseinrichtung (2) und im Kupplungsabschnitt des Antriebsteils (7) korrespondierende Führungseinrichtungen (5, 8) vorgesehen sind, die das Federelement (2) radial zum Antriebsteil (7) führen.

10. Kupplungsvorrichtung (1) nach Anspruch 7,
**dadurch gekennzeichnet,**
**daß** die Verriegelungseinrichtung (2) eine Verliersicherung aufweist, die aus dem am Federelement (2) ausgebildeten Auswerfer (9) besteht, welcher seinerseits einen am Antriebsteil (7) ausgebildeten Durchbruch (35) durchgreift.

11. Kupplungsvorrichtung (1) nach Anspruch 2,
**dadurch gekennzeichnet,**
**daß** die Verriegelungselemente (3) an ersten Verbindungsstegen (12) angeordnet sind, die einstückig mit dem Federelement (2) verbunden sind.

12. Kupplungsvorrichtung (1) nach Anspruch 2,
**dadurch gekennzeichnet,**
**daß** die Verriegelungselemente (3) keilförmig ausgestaltet sind und daß die Sperrelemente (10) von Vertiefungen (38) gebildet sind, deren horizontal verlaufende Wände (34) an den Anschlagflächen (37) anschlagen und deren schräg nach außen weisende Gleitflächen (40) an der Form der Gleitflächen (40) angepaßte Zentrierflächen (3) anschlagen.

13. Kupplungsvorrichtung (1) nach Anspruch 7,
**dadurch gekennzeichnet,**
**daß** die Auswerfer (9) an zweiten Verbindungsstegen (11) angeordnet sind, die einstückig mit dem Federelement (2) verbunden sind.

## Claims

1. A coupling device (1) for an appliance for domestic use, in particular a handheld blender or immersion blender, for connecting a drive part (7) to a tool shank (6), with a locking device (2) having at least one locking element (3) being arranged on a coupling section (24) of the drive part (7), said locking element being in engagement with a detent element (10) of the tool shank (6) in the locked state,
**characterized in that** said locking device (2) is constructed as an annular spring element and that in the area of the locking element (3) provision is made for an actuating device (4) causing, when actuated, the spring element (2) to be deformed elastically such that the locking element (3) becomes disengaged from the detent element (10).

2. The coupling device (1) according to claim 1,
**characterized in that** diametrically opposed on the spring element (2) is one locking element (3) each and that one detent element (10) each is provided at the corresponding position on the tool shank (6).

3. The coupling device (1) according to claim 1,
**characterized in that** on the outer wall of the coupling section (24) of the drive part (7) provision is made for at least one opening (13) through which at least one actuating device (4) formed on the spring element (2) projects outwardly in the locked state.

4. The coupling device (1) according to claim 3,
**characterized in that** diametrically opposed on the spring element (2) is one actuating device (4) each which project out through the openings (13) provided on the drive part (7).

5. The coupling device (1) according to claim 4,
**characterized in that** the actuating devices (4) are formed on the spring element (2) level with the locking elements (3).

6. The coupling device (1) according to claim 1,
**characterized in that** the locking device (2) is fabricated from a suitable thermoplastic material.

7. The coupling device (1) according to claim 1,
**characterized in that** the locking device (2) includes at least one ejector (9) disposed in a 90-degree offset relation to the locking element (3).

8. The coupling device (1) according to claim 7,
**characterized in that** diametrically opposed on the spring element (2) is one ejector (9) each and that the ejectors (9) include ramp surfaces (32) cooperating with corresponding abutment surfaces (33) on the tool shank (6).

9. The coupling device (1) according to claim 1,
**characterized in that** on the locking device (2) and in the coupling section of the drive part (7) provision is made for corresponding guide devices (5, 8) guiding the spring element (2) radially towards the drive part (7).

10. The coupling device (1) according to claim 7,
**characterized in that** the locking device (2) includes a captivating device comprised of the ejector (9) formed on the spring element (2), said ejector in turn engaging within a passage (35) formed on the drive part (7).

11. The coupling device (1) according to claim 2,
**characterized in that** the locking elements (3) are arranged on first connecting bars (12) integrally connected with the spring element (2).

12. The coupling device (1) according to claim 2,
**characterized in that** the locking elements (3) are of a wedge-shaped configuration and the detent elements (10) are in the form of depressions (38) whose horizontally extending walls (34) abut against the abutment surfaces (37) and whose obliquely outwardly extending sliding surfaces (40) abut against centering surfaces (3) shaped to conform to the shape of the sliding surfaces (40).

13. The coupling device (1) according to claim 7,
**characterized in that** the ejectors (9) are arranged on second connecting bars (11) which are integrally formed with the spring element (2).

## Revendications

1. Dispositif d'accouplement (1) pour un appareil à usage ménager, en particulier un mixeur manuel ou plongeur, pour relier un élément d'entraînement (7) avec une queue d'outil (6), dans lequel, sur une section d'accouplement (24) de l'élément d'entraînement (7), est agencé un dispositif de verrouillage (2) avec au moins un élément de verrouillage (3) qui, à l'état verrouillé, est en prise avec un élément de blocage (10) de la queue d'outil (6),
**caractérisé**
**en ce que** le dispositif de verrouillage (2) est réalisé comme un élément de ressort annulaire et en ce que dans la zone de l'élément de verrouillage (3) est formé un dispositif d'actionnement (4) dont l'actionnement provoque la déformation élastique de l'élément de ressort (2), de telle sorte que l'élément de verrouillage (3) sort de la prise de l'élément de blocage (10).

2. Dispositif d'accouplement (1) selon la revendication 1,
**caractérisé**
**en ce qu'**un élément de verrouillage (3) est disposé diamétralement à l'opposé de l'élément de ressort (2) et en ce qu'à l'emplacement correspondant sur la queue d'outil (6) est formé un élément de blocage (10).

3. Dispositif d'accouplement (1) selon la revendication 1,
**caractérisé**
**en ce que** sur la paroi extérieure de la section d'accouplement (24) de l'élément d'entraînement (7) est présente au moins une ouverture (13) par laquelle dépasse vers l'extérieur à l'état verrouillé au moins un dispositif d'actionnement (4) formé sur l'élément de ressort (2).

4. Dispositif d'accouplement (1) selon la revendication 3,
**caractérisé**
**en ce que** diamétralement à l'opposé de l'élément de ressort (2) est formé un dispositif d'actionnement (4) qui dépasse vers l'extérieur par les ouvertures (13) ménagées sur l'élément d'entraînement (7).

5. Dispositif d'accouplement (1) selon la revendication 4,
**caractérisé**
**en ce que** les dispositifs d'actionnement (4) sont formés à la hauteur des éléments de verrouillage (3) sur l'élément de ressort (2).

6. Dispositif d'accouplement (1) selon la revendication 1,
**caractérisé**
**en ce que** le dispositif de verrouillage (2) est fabriqué dans une matière thermoplastique appropriée.

7. Dispositif d'accouplement (1) selon la revendication 1,
**caractérisé**
**en ce que** le dispositif de verrouillage (2) présente au moins un éjecteur (9) qui est tourné à 90 degrés par rapport à l'élément de verrouillage (3).

8. Dispositif d'accouplement (1) selon la revendication 7,
**caractérisé**
**en ce que** des éjecteurs (9) sont diamétralement opposés sur l'élément de ressort (2), et en ce que les éjecteurs (9) présentent des surfaces inclinées (32) qui collaborent avec des surfaces de butée (33) correspondantes sur la queue d'outil (6).

9. Dispositif d'accouplement (1) selon la revendication 1,
**caractérisé**
**en ce que** sur le dispositif de verrouillage (2) et dans la section d'accouplement de l'élément d'entraînement (7) sont prévus des dispositifs de guidage correspondants (5, 8) qui guident l'élément de ressort (2) de manière radiale par rapport à l'élément d'entraînement (7).

10. Dispositif d'accouplement (1) selon la revendication 7,
**caractérisé**
**en ce que** le dispositif de verrouillage (2) présente un dispositif anti-perte qui est constitué de l'éjecteur (9) formé sur l'élément de ressort (2) qui traverse pour sa part un passage (35) ménagé dans l'élément d'entraînement (7).

11. Dispositif d'accouplement (1) selon la revendication 2,
**caractérisé**
**en ce que** les éléments de verrouillage (3) sont disposés sur des barrettes de liaison (12) qui sont reliées d'une pièce avec l'élément de ressort (2).

12. Dispositif d'accouplement (1) selon la revendication 2,
**caractérisé**
**en ce que** les éléments de verrouillage (3) sont en forme de coins et en ce que les éléments de blocage (10) sont formés par des renfoncements (38) dont les parois courant horizontalement (34) butent contre les surfaces de butée (37) et dont les surfaces de glissement (40) inclinées vers l'extérieur butent contre des surfaces de centrage (3) adaptées à la forme des surfaces de glissement (40).

13. Dispositif d'accouplement (1) selon la revendication 7,
**caractérisé**
**en ce que** les éjecteurs (9) sont disposés sur des deuxièmes barrettes de liaison (11) qui sont reliées d'une pièce avec l'élément de ressort (2).
